# EUROPÄISCHE PATENTSCHRIFT

(11) **EP 1 367 608 B1**
(45) Veröffentlichungstag und Bekanntmachung des Hinweises auf die Patenterteilung: **26.11.2008**
(21) Anmeldenummer: 02028819.7
(22) Anmeldetag: 21.12.2002
(51) Int. Cl.: H01B 13/00

(54) **Verfahren zum Ummanteln von langgestrecktem Gut, wie insbesondere Kabelsätzen, mit zwei streifenförmigen Eindeckungen, die das Gut schlauchartig umschliessen**
Method for sheathing longitudinally extended products, especially cable harnesses, with two strip-shaped coverings, which tubular surround that products
Procédé pour enrober des produits longs, en particulier des faisceaux de câbles, avec deux revêtements en forme de ruban, qui entourent ces produits sous forme tubulaire

(30) Priorität: 22.01.2002 DE 10202454
(43) Veröffentlichungstag der Anmeldung: 03.12.2003
(73) Patentinhaber: tesa AG, 20253 Hamburg (DE)
(72) Erfinder: von Samson-Himmelstjerna, Matthias, 24558 Henstedt-Ulzburg (DE); Gehringer, Patrick, 77590 Bois le Roi (FR)
(74) Vertreter: Stubbe, Andreas

(56) Entgegenhaltungen:
- AT-B- 254 964
- DE-A- 1 490 343
- DE-A- 2 802 138
- DE-A- 19 732 958

## Beschreibung

Die Erfindung bezieht sich auf ein Verfahren zum Ummanteln von langgestrecktem Gut, wie insbesondere Kabelsätzen, mit zwei streifenförmigen Eindeckungen, die das Gut schlauchartig umschließen.

Die Verwendung von Klebebändern mit einem Vlies als Träger zur Bandagierung von Kabelbäumen ist bekannt. So beschreibt die DE-G 94 01 037 ein Klebeband mit einem bandförmigen, textilen Träger, der aus einem Nähvlies besteht, das seinerseits aus einer aus einer Vielzahl parallel zueinander laufender, eingenähter Nähte gebildet wird.

Neben dem in der genannten Schrift erwähnten Nähvlies gibt es weitere Träger, die in Klebebändern zur Kabelbaumbandagierung eingesetzt werden.
Die DE 44 42 092 C1 beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Kunit- beziehungsweise Multiknitvliesen.

Aus der DE 195 23 494 C1 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Aus der DE 298 19 014 U1 sind Klebebänder auf Basis eines mit Luft- und/oder Wasserstrahlen verfestigten Vliesen bekannt.

Aus der DE 199 23 399 A1 ist ein Klebeband mit einem bandförmigen Träger aus Vliesmaterial bekannt, das zumindest einseitig mit einem Kleber beschichtet ist, wobei das Vlies ein Stapelfaservlies darstellt, das durch mechanische Bearbeitung verfestigt oder naßgelegt wird. Zwischen 2 % und 50 % der Fasern des Vlieses sind Schmelzfasern, und zwar solche aus Homo-, Copolymer- oder Bikomponentenfasern mit einem niedrigeren Erweichungs- oder Schmelzpunkt.
Beispielhaft erwähnt ist, daß die Schmelzfasern des Vlieses aus Polypropylen, Polyethylen, Polyamid, Polyester oder Copolymeren bestehen.

Ein weiteres Klebeband mit einem bandförmigen Träger aus Vliesmaterial ist in der DE 199 37 446 A1 offenbart. Das Klebeband ist zumindest einseitig mit einem Kleber beschichtet, wobei das Vlies ein Stapelfaservlies darstellt, das durch mechanische Bearbeitung verfestigt oder naßgelegt wird. Hier erfolgt die weitere Verfestigung des Stapelfaservlieses durch Zugabe von Bindemitteln, wie zum Beispiel Pulver, Folien, Gitternetze, Bindefasern. Die Bindemittel können in Wasser oder organischen Lösemitteln gelöst sein und/oder als Dispersion vorliegen.
Vorzugsweise kommen die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere zum Einsatz.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.

Mit der DE 197 32 958 A1 ist ein Klebeband zum Ummanteln von langgestrecktem Gut, wie Kabelsätzen oder Kunststoffprofilen, offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, daß sich bei Vorhandensein eines leichten Anpreßdruckes auf zwei aufeinander liegenden Klebeschichten unter Auflösung der Grenzflächen und vollständiger Koaleszenz der Klebeschichten eine homogene Haftklebstoff-Masse bildet.
Des weiteren umfaßt die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.
Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, daß beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

Die WO 97/26664 A1 offenbart einen Abroller, der dazu dient, einen Kabelbaum mittels eines einzigen Klebebands zu ummanteln. In dem Abroller ist hierzu eine spezielle Führung vorgesehen, in der das Klebeband, während es in axialer Richtung zum Kabelbaum geführt wird, um denselben gebogen wird, bis die beiden Enden des Klebebands aufeinander gepreßt werden, so daß sich in dem gebildeten schlauchförmigen Hohlraum der Kabelbaum befindet. Es resultiert ein ummantelter Kabelbaum, der eine verhältnismäßig große Fahne aufweist, die aus den beiden zusammenklebenden Enden des Klebbands gebildet wird.

Aus der DE 28 02 138 A1 ist ein Verfahren zum Ummanteln von langgestrecktem Gut, wie insbesondere Kabelsätzen, mit zwei streifenförmigen Eindeckungen, die das Gut schlauchartig umschließen, so dass sich das Gut im wesentlichen mittig zwischen den Eindeckungen befindet, bekannt, wobei zur Ummantelung von Kabeln zwei Folienstreifen verwendet werden, die miteinander verschweißt werden.

Der vorliegenden Erfindung liegt die Aufgabe zugrunde, ein Verfahren zum Ummanteln von langgestrecktem Gut, wie insbesondere Kabelsätzen, zur Verfügung zu stellen, das die besonders einfache, preiswerte und schnelle Ummantelung von langgestrecktem Gut ermöglicht, so daß die Nachteile des Standes der Technik nicht oder zumindest nicht in dem Umfang auftreten. Insbesondere soll das Verfahren ermöglichen, auf die bisher übliche spiralförmige und somit zeit- und personalintensive Umwickelung des Gutes mit dem eingesetzten Material zu verzichten.

Gelöst wird diese Aufgabe durch ein Verfahren, wie es im Hauptanspruch niedergelegt ist. Gegenstand der Unteransprüche sind dabei vorteilhafte Weiterbildungen des Verfahrens, ein unter Verwendung des erfindungsgemäßen Verfahrens ummanteltes Gut sowie ein Abroller, der zur Durchführung des Verfahrens Verwendung findet.

Demgemäß betrifft die Erfindung ein Verfahren zum Ummanteln von langgestrecktem Gut, wie insbesondere Kabelsätzen, mit zwei streifenförmigen Eindeckungen, die das Gut schlauchartig umschließen, so daß sich das Gut im wesentlichen mittig zwischen den Eindeckungen befindet, wobei die Eindeckungen einseitig selbstklebend ausgerüstete Klebebänder sind und so zusammengeführt sind, daß die Eindeckungen in den sich berührenden Kantenbereichen miteinander verklebt sind und wobei als Trägermaterial für die Klebebänder Vliese verwendet werden.

Weiter vorzugsweise sind beide Eindeckungen einseitig selbstklebend ausgerüstete Klebebänder, die nur in den Kantenbereichen streifenförmig beschichtet sind, besonders vorzugsweise jeweils nur in einem Kantenbereich.
Die Dicke des Kleberstreifens ist so zu wählen, daß zumindest der sichere Halt der beiden Klebebänder durch die Klebemasse gewährleistet ist.
Die Beschichtung des und/oder der Klebebänder kann partiell sein, beispielsweise punktuell (durch Siebdruck) oder in kleinen Strichen oder Streifen.

In einer weiteren hervorragend ausgestalteten Ausführungsform weisen die Klebebänder die gleiche Breite auf.

Als Trägermaterial für die Klebebänder werden Vliese verwendet, wobei unter "Vlies" zumindest textile Flächengebilde gemäß EN 29092 (1988) sowie Nähwirkvliese und ähnliche Systeme zu verstehen sind. Dabei müssen die Trägermaterialien nicht zwangsläufig aus den gleichen Materialien bestehen.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann, ebenso zeigt somit auch die Eindeckung einen sehr geringen Foggingwert.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasem vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Die Klebebänder können eine Selbstklebemasse auf Basis von Naturkautschuk, PUR, Acrylaten oder Styrol-Isopren-Styrol-Blockcolymeren enthalten. Die Verwendung von Klebemassen auf Basis von Naturkautschuk, Acrylaten oder Styrol-Isopren-Stryrol für Verpackungsbänder ist bekannt, was auch zum Beispiel im "Handbook of pressure sensitive adhesive technologie, second edition, herausgegeben durch Donatas Satas, Van Nostrand Reinhold, New York, 1989 beschrieben wird.

Als selbstklebende Masse kommt insbesondere eine handelsübliche druckempfindliche Klebmasse auf PUR, Acrylat- oder Kautschukbasis zum Einsatz.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.
Die Klebemasse auf Acrylathotmelt-Basis kann aber auch chemisch vernetzt sein.
In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estem, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-lsopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Kohlenwasserstoffharz ist eine Sammelbezeichnung für thermoplastische, farblose bis intensiv braun gefärbte Polymere mit einer Molmasse von im allgemeinen <2000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol bzw. durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20°C flüssige Kohlenwasserstoffharze) bis >200 °C variierendem Erweichungsbereich und einer Dichte von ca. 0,9 bis 1,2 g/cm³.

Sie sind löslich in organischen Lösungsmitteln wie Ethern, Estern, Ketonen und chlorierten Kohlenwasserstoffen, unlöslich in Alkoholen und Wasser.

Unter Kolophoniumharz wird ein natürliches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethern und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90 % Harzsäuren und 10 % Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H30O2, Abietin-, Neoabietin-, Lävopimar-, Pimar-, Isopimar-, und Palustrinsäure, neben hydrierter und dehydrierter Abietinsäure.
Die Mengenverhältnisse dieser Säuren variieren in Abhängigkeit von der Provenienz des Kolophoniums.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene,
- isoprene, flüssige Nitrilkaufischuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50°C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Schließlich umfaßt die Erfindung ein mit zwei Eindeckungen ummanteltes langgestrecktes Gut, wie insbesondere ein Kabelsatz, wobei die Eindeckungen das Gut schlauchartig umschließen, so daß sich das Gut im wesentlichen mittig zwischen den Eindeckungen befindet, wobei die Eindeckungen einseitig selbstklebend ausgerüstete Klebebänder sind und so zusammengeführt sind daß die Eindeckungen in den sich berührenden Kantenbereichen miteinander verklebt sind und wobei als Trägermaterial für die Klebebänder Vliese verwendet werden.

Auch hier ist es als besonders vorteilhaft herauszustellen, wenn beide Eindeckungen einseitig selbstklebend ausgerüstete Klebebänder sind, die nur in den Kantenbereichen streifenförmig beschichtet sind, besonders vorzugsweise jeweils nur in einem Kantenbereich.

Die erfindungsgemäßen Klebebänder, also sämtliche Ausführungsformen der Ummantelung, können in festen Längen wie zum Beispiel als Meterware oder aber als Endlosware auf Rollen (archimedische Spirale) zur Verfügung gestellt werden. Für die Verwendung ist im letzteren Fall dann ein variables Ablängen durch Messer, Scheren oder Dispenser u.ä. möglich oder aber bei geeigneter Wahl der Materialien für die Klebebänder eine manuelle Verarbeitbarkeit ohne Hilfsmittel.

Zur Verklebung kommen insbesondere Streifen des Klebebands zum Einsatz, die eine Breite von 15 bis 50 mm aufweisen.

Die Länge der Klebebänder richtet sich nach der Ausgestaltung des zu ummantelten Gutes.

Sodann ist Teil der Erfindung ein Abroller, der zur Durchführung des Verfahrens entsprechend ausgestaltet ist. Der Abroller zum Ummanteln von langgestrecktem Gut, wie insbesondere Kabelsätzen, mit zwei Eindeckungen, die die das Gut schlauchartig umschließen, so daß sich das Gut im wesentlichen mittig zwischen den Eindeckungen befindet, wobei die Eindeckungen so zusammengeführt sind, daß die Eindeckungen in den sich berührenden Kantenbereichen miteinander verbunden sind, besteht insbesondere aus
- zwei Halterungen für zwei Rollen der Eindeckungen,
- Führungsvorrichtungen, die die Eindeckungen zum Gut führen,
- einer Auflegevorrichtung, die die Eindeckungen so zusammenführt, daß die Eindeckungen das Gut schlauchförmig umgeben und daß die zwei Eindeckungen in den sich berührenden Kantenbereichen miteinander verbunden sind, wobei die Eindeckungen einseitig selbstklebend ausgerüstete Klebebänder sind und als Trägermaterial für die Klebebänder Vliese verwendet werden.

Die Führungsvorrichtungen bestehen vorzugsweise aus drei Bauteilen Über ein erstes Walzenpaar werden die Klebebänder abgezogen und zwei Winkelblechen zugeführt. In diesen werden die Klebebänder um 90° umgeleitet, so dass die Längsachse der Klebebänder parallel zum Kabelbaum ausgerichtet ist.
Ein zweites Schaumwalzenpaar führt die Klebebänder an den Kabelbaum.

Vorzugsweise besteht die Auflegevorrichtung selbst aus zwei klammerartigen Stempeln, die die Eindeckungen und das zu ummantelte Gut zangenartig umfassen.
Vorzugsweise sind an den Stempelköpfen, die die Bänder unmittelbar auflegen, Walzen vorhanden, die besonders vorteilhaft mit Vulkollan ® beschichtet sind, ein besonders weicher und anschmiegsamer Schaumstoff.
Vulkollan ® ist ein gießbares Polyurethan-Elastomer auf der Basis von Naphthalin-1,5-diyldiisocyanat.

Der Abroller zeichnet sich durch eine Vielzahl von Vorteilen aus:
- Er ist sehr leicht handhabbar.
- Er bringt für den Anwender eine deutliche Gewichtseinsparung bei der täglichen Arbeit.
- Aufgrund der kompakten Bauweise weist dieser sehr kurze Applikationswege auf dem Kabelbaum auf, des weiteren keinen Einlaufschlitten zum Umformen eines "I"-förmigen Klebebandes in ein "U"-förmiges und dann weiter zur Fähnchenbildung.
- In einer bevorzugten Ausführungsform sind an den Stempelköpfen Schaumwalzen, so daß das Anpressen der beiden aus den Klebebändern gebildeten Fähnchen durch weiche axial drückende Schaumwalzen erfolgt und somit sehr schonend ist.
- Der Abroller ermöglicht die Bildung einer gleichmäßigen, schmalen doppelreihigen Fähnchenleiste.
- Es tritt weniger Faltenbildung an der Klebebandumhüllung auf.
- Der Abroller sorgt für eine geringe Reibung, so daß der Kraftaufwand für den Werker beim Ziehen der Pistole über den Kabelbaum in Längsrichtung geringer wird.
- Der Abroller gestattet auch den Einsatz breiterer Klebebänder bei wechselnden Kabeldurchmessern.
- Die Applizierwege auf dem Wickelbrett können von Kabelabzweigung zu Kabelabzweigung kürzer sein (raumsparende Ausführung).
- Die Appliziergeschwindigkeit kann höher sein, woraus unmittelbar ein Produktivitätsgewinn resultiert.

Durch die erfinderische Ummantelung des bevorzugten Kabelbaums ist dieser hervorragend geschützt und gegen Erschütterungen gedämpft. Die Ummantelung ist leicht, so daß der Kabelbaum nicht sehr an Gewicht zulegt, insbesondere im Vergleich zu den herkömmlichen Methoden der Ummantelung, nämlich ein Klebeband spiralförmig um die gebündelten Kabel zu wickeln, und dehnfähig, so daß der Kabelbaum insgesamt verformbar ist. Er kann somit in schwierigen Lagen den zur Verfügung stehenden Platzverhältnissen hervorragend angepaßt werden.
Durch seinen ursprünglich runden oder ovalen Querschnitt erleichtert der erfindungsgemäße Kabelbaum die störungsfreie Durchführung durch Bohrungen, Löcher, Öffnungen und dergleichen, ermöglicht anschließend eine leichte Verformbarkeit in andere Geometrien und Querschnitte, um sich so den örtlichen Gegebenheiten möglichst ideal anzupassen. So ist selbst ein nahezu flaches Profil für die Verlegeaufgaben zum Beispiel in der Bodengruppe unter dem Teppich möglich, ohne die unterschiedlichen Querschnitte bereits bei der Kabelbaumfertigung einarbeiten zu müssen.

Gegenüber dem bisherigen Spiralwickeln ist eine derartige Längsumhüllung nicht nur einfacher und schneller zu handhaben, sondern durch den Einsatz von partiell im Randbereich beschichteten Klebebändern wird auch Klebemasse gespart.

Neben der Kosteneinsparung reduziert sich auch das Fogging um den Anteil der eingesparten Klebemasse; ebenso vermindern sich die Probleme in der Verträglichkeit zwischen Klebemasse und Kabelummantelung, wie sie insbesondere bei PVC-freien Kabeln und nicht speziell geeigneten Klebemassen auftreten können, da bei der erfindungsgemäßen Längsummantelung keine oder nur eine minimale Kontaktfläche Klebemasse zu Kabelisolierung auftritt.

Schließlich verhindert die erfindungsgemäße Art des Einwickelns Faltenwurf.

Die erfindungsgemäße Lösung hat weiterhin die Vorteile, daß es sich um einen sauberen, einfach, schnell und kostengünstig herzustellenden Kabelbaum handelt, welcher einen guten Oberflächenschutz bietet, hohe Bündelungskraft, gute Geräuschdämpfung und bei dicken Kabelsätzen eine sehr hohe Verformbarkeit in Querschnittsrichtung gewährleistet.

Im folgenden soll die Erfindung anhand mehrerer Figuren näher erläutert werden, ohne damit die Erfindung unnötig einschränken zu wollen.

Es zeigen
- Figur 2: einen Kabelbaum, der erfindungsgemäß ummantelt ist,
- Figur 3: einen Abroller, der im erfindungsgemäßen Verfahren Verwendung findet.

In der Figur 2 ist im Querschnitt eine nach dem erfindungsgemäßen Verfahren hergestellte Ummantelung gezeigt, die eben insbesondere zur Ummantelung von langgestrecktem Gut, insbesondere Kabelsätzen, eingesetzt werden kann.

Die Ummantelung erfolgt, indem zwei streifenförmige Eindeckungen 41, 42, die hier beide in Form eines Klebebands ausgeführt sind, den Kabelbaum 5 schlauchartig umschließen, so daß sich der Kabelbaum im wesentlichen mittig zwischen den Eindeckungen 41, 42 befindet. Die Klebebänder 41, 42 sind so zusammengeführt, daß die Klebebänder 41, 42 in den sich berührenden Kantenbereichen miteinander aufgrund der Klebemassen verklebt sind, so daß zwei stabile Verbindungspunkte 36, 37 ergeben.

Auf diese Art der Ummantelung des Kabelbaums 5 ergeben sich zwei sogenannte Fähnchen, die sich im wesentlichen in radialer Richtung in Bezug auf den Kabelbaum 5 erstrecken.
Die Fähnchen sind aber weiterhin flexibel, so daß diese bei engen Einbauverhältnissen an den ummantelten Kabelbaum 5 angeschmiegt werden können.

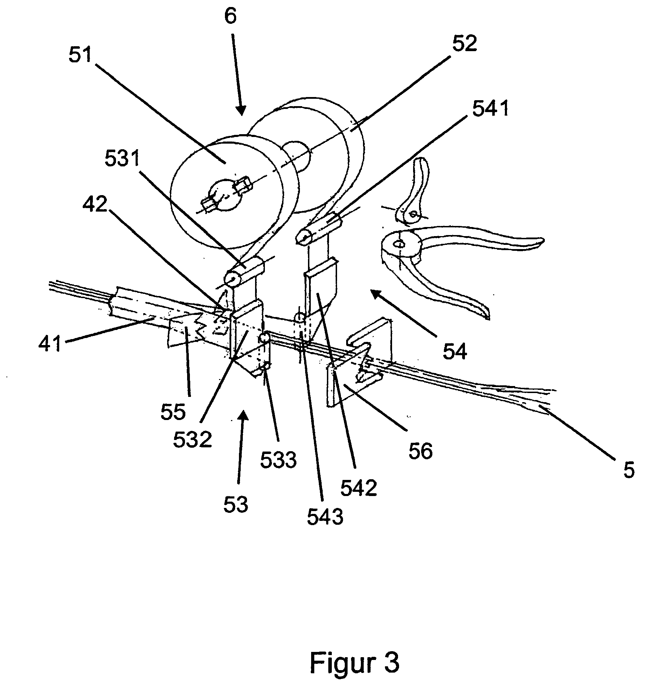

Die Figur 3 stellt einen Abroller 6 zum Ummanteln des Kabelbaums 5, der zwei Klebebänder 41, 42, wie sie aus der Figur 1 bekannt sind, so auf den Kabelbaum 5 legt, daß diese jenen schlauchartig umschließen.
Der Abroller 6 wird hierzu in axialer Richtung zum Kabelbaum geführt, wie sie mit dem Pfeil angedeutet ist. Nach der Ummantelung befindet sich der Kabelbaum 5 im wesentlichen mittig zwischen den Klebebändern 41, 42. Diese werden des weiteren so an den Kabelbaum 5 geführt, daß sie in den sich berührenden Kantenbereichen miteinander fest verklebt sind.

Zur gezielten Führung des Kabelbaums 5 ist eine Zentrierung 56 im Abroller vorgesehen, durch die der Kabelbaum 5 in den Abroller eingeführt wird.

Der Abroller 6 weist im wesentlich drei Baugruppen auf. Zwei Halterungen 51, 52 nehmen die zwei Rollen Klebeband 41, 42 auf.

In den zwei Führungsvorrichtungen 53, 54 werden die Klebebänder 41, 42 zum Kabelbaum 5 über Umlenkrollen geführt.

Die Führungsvorrichtungen 53, 54 bestehen im wesentlichen ihrerseits aus drei Bauteilen. Über ein erstes Walzenpaar 531, 541 werden die Klebebänder 41, 42 abgezogen und zwei Winkelblechen 532, 542 zugeführt. In diesen werden die Klebebänder 41, 42 um 90° umgeleitet, so dass die Längsachse der Klebebänder 41, 42 parallel zum Kabelbaum 5 ausgerichtet ist.
Ein zweites Walzenpaar 533, 543 führt die Klebebänder 41, 42 an den Kabelbaum 5.

Schließlich dient eine Auflegevorrichtung 55 dazu, die Klebebänder 41, 42 schlauchförmig um den Kabelbaum 5 zu legen.

Die Auflegevorrichtung 5 besteht dabei aus zwei klammerartigen Stempeln, die die Klebebänder 41, 42 und den zu ummantelten Kabelbaum 5 zangenartig umfassen, so daß bei der Bewegung des Abrollers zum einen der besagte Schlauch gebildet wird und zum anderen die Klebemassen der Klebebänder 41, 42 fest aufeinander gepreßt werden.

## Patentansprüche

1. Verfahren zum Ummanteln von langgestrecktem Gut, wie insbesondere Kabelsätzen, mit zwei streifenförmigen Eindeckungen, die das Gut schlauchartig umschließen, so dass sich das Gut im wesentlichen mittig zwischen den Eindeckungen befindet, **dadurch gekennzeichnet, dass** die Eindeckungen einseitig selbstklebend ausgerüstete Klebebänder sind und so zusammengeführt sind, dass die Eindeckungen in den sich berührenden Kantenbereichen miteinander verklebt sind und wobei als Trägermaterial für die Klebebänder Vliese verwendet werden.

2. Verfahren nach Anspruch 1, **dadurch gekennzeichnet, dass** beide Eindeckungen einseitig selbstklebend ausgerüstete Klebebänder sind, die nur in den Kantenbereichen streifenförmig beschichtet sind, vorzugsweise jeweils nur in einem Kantenbereich.

3. Verfahren nach den Ansprüchen 1 oder 2, **dadurch gekennzeichnet, dass** die Klebebänder die gleiche Breite aufweisen.

4. Verfahren nach zumindest einem der Ansprüche 1 bis 3, **dadurch gekennzeichnet, dass** als Trägermaterial für das Klebeband Vliese verwendet werden, die durch ein Übernähen mit separaten Fäden oder durch ein Vermaschen oder Wasserstrahlen oder Nadeln verfestigt sind.

5. Verfahren nach zumindest einem der Ansprüche 1 bis 4, **dadurch gekennzeichnet, dass** die Klebebänder eine Breite von 10 bis 100 mm aufweisen, insbesondere von 15 bis 50 mm.

6. Mit zwei Eindeckungen (41, 42) ummanteltes langgestrecktes Gut (5), wie insbesondere ein Kabelsatz (5), wobei die Eindeckungen (41, 42) das Gut (5) schlauchartig umschließen, so dass sich das Gut (5) im wesentlichen mittig zwischen den Eindeckungen (41, 42) befindet, **dadurch gekennzeichnet, dass** die Eindeckungen (41, 42) einseitig selbstklebend ausgerüstete Klebebänder (41, 42) sind und so zusammengeführt sind, dass die Eindeckungen (41, 42) in den sich berührenden Kantenbereichen miteinander verklebt sind und wobei als Trägermaterial für die Klebebänder (41, 42) Vliese verwendet werden.

7. Abroller zum Ummanteln von langgestrecktem Gut (5), wie insbesondere Kabelsätzen (5), mit zwei Eindeckungen (41, 42), die die das Gut (5) schlauchartig umschließen, so dass sich das Gut (5) im wesentlichen mittig zwischen den Eindeckungen (41, 42) befindet, wobei die Eindeckungen (41, 42) so zusammengeführt sind, dass die Eindeckungen (41, 42) in den sich berührenden Kantenbereichen miteinander verbunden sind, **dadurch gekennzeichnet daß** der Abroller aus zwei Halterungen (51, 52) für zwei Rollen der Eindeckungen (41, 42), Führungsvorrichtungen (53, 54), die die Eindeckungen (41, 42) zum Gut (5) führen, und einer Auflegevorrichtung (55), besteht, wobei die Auflegevorrichtung die Eindeckungen (41, 42) so zusammenführt, dass die Eindeckungen (41, 42) das Gut (5) schlauchförmig umgeben und dass die zwei Eindeckungen (41, 42) in den sich berührenden Kantenbereichen miteinander verbunden sind, wobei die Eindeckungen (41, 42) einseitig selbstklebend ausgerüstete Klebebänder (41, 42) sind und als Trägermaterial für die Klebebänder (41, 42) Vliese verwendet werden.

8. Abroller nach Anspruch 7, **dadurch gekennzeichnet, dass** die Auflegevorrichtung (55) aus zwei klammerartigen Stempeln besteht, die die Eindeckungen (41, 42) und das zu ummantelte Gut (5) zangenartig umfassen.

## Claims

1. Method of wrapping elongate material, such as more particularly cable harnesses, with two strip-shaped covers which tubularly embrace the material, so that the material is located substantially centrally between the covers, **characterized in that** the covers are single-sidedly self-adhesively furnished adhesive tapes and have been brought together in such a way that the covers are adhesively bonded to one another in the mutually contacting edge regions, with nonwovens being used as backing material for the adhesive tapes.

2. Method according to Claim 1, **characterized in that** both covers are single-sidedly self-adhesively furnished adhesive tapes which carry a strip-shaped coating only in the edge regions, preferably only in one edge region in each case.

3. Method according to Claim 1 or 2, **characterized in that** the adhesive tapes have the same width.

4. Method according to at least one of Claims 1 to 3, **characterized in that**, as backing material for the adhesive tape, nonwovens are used which are consolidated by overstitching with separate threads or by interlooping or waterjets or needles.

5. Method according to at least one of Claims 1 to 4, **characterized in that** the adhesive tapes have a width of 10 to 100 mm, more particularly of 15 to 50 mm.

6. Elongate material (5), such as, more particularly, a cable harness (5), wrapped with two covers (41, 42), the covers (41, 42) tubularly embracing the material (5), so that the material (5) is located substantially centrally between the covers (41, 42), **characterized in that** the covers (41, 42) are single-sidedly self-adhesively furnished adhesive tapes (41, 42) and have been brought together in such a way that the covers (41, 42) are adhesively bonded to one another in the mutually contacting edge regions, with nonwovens being used as backing material for the adhesive tapes (41, 42).

7. Unwind unit for wrapping elongate material (5), such as, more particularly, cable harnesses (5), having two covers (41, 42) which tubularly embrace the material (5), so that the material (5) is located substantially centrally between the covers (41, 42), the covers (41, 42) being brought together in such a way that the covers (41, 42) are joined to one another in the mutually contacting edge regions, **characterized in that** the unwind unit is composed of two holders (51, 52) for two rolls of the covers (41, 42), guide devices (53, 54) which guide the covers (41, 42) to the material (5), and a feeder device (55), the feeder device bringing the covers (41, 42) together in such a way that the covers (41, 42) tubularly surround the material (5) and that the two covers (41, 42) are joined to one another in the mutually contacting edge regions, the covers (41, 42) being single-sidedly self-adhesively furnished adhesive tapes (41, 42) and nonwovens being used as backing material for the adhesive tapes (41, 42).

8. Unwind unit according to Claim 7, **characterized in that** the feeder device (55) is composed of two clamp-like rams which grasp, in the manner of tongs, the covers (41, 42) and the material (5) to be wrapped.

## Revendications

1. Procédé pour envelopper des matériaux allongés, tels que des jeux de câbles, avec deux recouvrements en forme de bande qui entourent le matériau en forme de flexible, de manière telle que le matériau se trouve essentiellement au centre entre les recouvrements, **caractérisé en ce que** les recouvrements sont des bandes adhésives apprêtées de manière autoadhésive sur une face et sont assemblés de manière telle que les recouvrements sont collés l'un à l'autre au niveau des zones de bord qui se touchent et où on utilise comme matériau support pour les bandes adhésives des non-tissés.

2. Procédé selon la revendication 1, **caractérisé en ce que** les deux recouvrements sont des bandes adhésives apprêtées de manière autoadhésive sur une face, qui ne sont revêtues en forme de bande qu'au niveau de zones de bord, de préférence à chaque fois uniquement au niveau d'une seule zone de bord.

3. Procédé selon les revendications 1 ou 2, **caractérisé en ce que** les bandes adhésives présentent la même largeur.

4. Procédé selon au moins l'une quelconque des revendications 1 à 3, **caractérisé en ce qu'**on utilise comme matériau support pour la bande adhésive des non-tissés qui sont solidifiés par une surpiqûre avec des fils séparés ou par un maillage ou des jets d'eau ou un aiguilletage.

5. Procédé selon au moins l'une quelconque des revendications 1 à 4, **caractérisé en ce que** les bandes adhésives présentent une largeur de 10 à 100 mm, en particulier de 15 à 50 mm.

6. Matériau (5) allongé tel qu'en particulier un jeu de câbles (5), enveloppé par deux recouvrements (41, 42), les recouvrements (41, 42) entourant le matériau (5) en forme de flexible de manière telle que le matériau (5) se trouve essentiellement au centre entre les recouvrements (41, 42), **caractérisé en ce que** les recouvrements (41, 42) sont des bandes adhésives (41, 42) apprêtées de manière autoadhésive sur une face et sont assemblés de manière telle que les recouvrements (41, 42) sont collés l'un à l'autre au niveau des zones de bord qui se touchent et où on utilise comme matériau support pour les bandes adhésives (41, 42) des non-tissés.

7. Dérouleur pour envelopper un matériau allongé (5), tel qu'en particulier des jeux de câbles (5), par deux recouvrements (41, 42), qui entourent le matériau (5) en forme de flexible, de manière telle que le matériau (5) se trouve essentiellement au centre entre les recouvrements (41, 42), où les recouvrements (41, 42) sont assemblés de manière telle que les recouvrements (41, 42) sont assemblés l'un à l'autre au niveau des zones de bord qui se touchent, **caractérisé en ce que** le dérouleur est constitué par deux fixations (51, 52) pour deux rouleaux des recouvrements (41, 42), par des dispositifs de guidage (53, 54), qui guident les recouvrements (41, 42) vers le matériau (5), et par un dispositif de mise en place (55), où le dispositif de mise en place réunit les recouvrements (41, 42) de manière telle que les recouvrements (41, 42) entourent le matériau (5) en forme de flexible et que les deux recouvrements (41, 42) sont assemblés l'un à l'autre au niveau des zones de bord qui se touchent, les recouvrements (41, 42) étant des bandes adhésives (41, 42) apprêtées de manière autoadhésive sur une face et des non-tissés étant utilisés comme matériau support pour les bandes adhésives (41, 42).

8. Dérouleur selon la revendication 7, **caractérisé en ce que** le dispositif de mise en place (55) est constitué par deux pistons en forme de pattes qui entourent les recouvrements (41, 42) et le matériau à envelopper (5) en forme de pince.
